# EUROPEAN PATENT SPECIFICATION

(11) **EP 1 498 510 B1**
(45) Date of publication and mention of the grant of the patent: **05.05.2010**
(21) Application number: 04016824.7
(22) Date of filing: 16.07.2004
(51) Int. Cl.: C23C 18/12, C09D 5/08

(54) **Metal surface treatment composition, metal surface treatment method, and galvanized steel plate**
Zusammensetzung und Verfahren zur Behandlung von Metalloberflächen und galvanisierte Stahlplatte
Composition et procédé pour le traitement de surfaces métalliques et tôle d'acier galvanisée

(30) Priority: 17.07.2003 JP 2003198687
(43) Date of publication of application: 19.01.2005
(73) Proprietor: Nippon Paint Co., Ltd., Osaka-shi, Osaka 531-8511 (JP); Taki Chemical Co., Ltd., Kakogawa-shi, Hyogo-ken 675-0124 (JP)
(72) Inventor: Tounaka, Atsuhiko, Kawasaki-shi Kanagawa 216-0007 (JP); Wada, Yutaka, Sakai-shi Osaka 599-8238 (JP)
(74) Representative: HOFFMANN EITLE

(56) References cited:
- WO-A-02/072712
- JP-A- 8 143 314
- US-A- 3 809 572
- US-A- 5 260 357
- US-A1- 2001 054 455
- US-B1- 6 537 672

## Description

### TECHNICAL FIELD

The present invention relates to a metal surface treatment composition, a metal surface treatment method and a galvanized steel plate.

### BACKGROUND ART

Galvanized steel plates, to which zinc plating or zinc alloy plating is applied, are used as steel materials having the high corrosion resistance. In such galvanized steel plates, a zinc plating layer is oxidized through contact with air to form white color rust. Therefore, it is necessary to prevent oxidation by applying surface treatment. In some applications, galvanized steel plates are used without being coated after being processed. In such a case, it is important that the galvanized steel plate has a rust-preventive property in an uncoated condition.

As such treatment, there is known chromate-treatment using a chromium compound. When chromate-treatment is applied, the formation of white color rust is prevented and a very good galvanized steel plate can be obtained. However, since the waste water containing a chromium compound requires a great deal of burden for the disposal, a method of performing chemical conversion treatment with a chromate-free treatment agent not using chromium is studied.

As such a chromate-free treatment agent, there are disclosed metal surface treatment agents for galvanized steel plates, which contain metal salt compounds (cf. Japanese Kokai Publication Hei-9-241856, Japanese Kokai Publication 2001-172771 and Japanese Kokai Publication 2001-247977, for instance). However, galvanized steel plates, surface treated with such the treatment agents, did not have sufficient properties of a rust-preventive property, adhesion to a film and the like.

In addition, a chemical conversion treatment solution for galvanized steel plates, which contains oxyacid salts of metals selected frommolybdenum, vanadium, tungsten, niobium and tantalum, manganese compounds, titanium compounds and phosphoric acid or phosphates, is disclosed (cf. Japanese Kokai Publication 2002-105659, for instance). However, in such a chemical conversion treatment solution for galvanized steel plates, it is necessary to use a manganese compound. Since the manganese compound also requires a great deal of burden for the disposal of its waste water, it is preferred not to use it.

In addition, as a rust-preventive component used for a metal surface treatment composition, water-dispersible silica is used. However, when the water-dispersible silica is used alone, it did not have an adequate rust-preventive property and the metal surface treatment composition couldnot attain an adequate rust-preventive property in providing the rust-preventive property for such a galvanized steel plate.

US 6,537,672 B1 discloses a domestic appliance having a powder-coated surface, the powder-coated surface having thereon a scratch-resistant and abrasion-resistant topcoat of a coating material prepared from the following components: (a) a condensate based on a hydrolysable silane containing predetermined substituents; (b) a predetermined curing catalyst; (c) nanoscale particulate inorganic solid having a predetermined particle size; and (d) at least one organic monomer, oligomer, or polymer containing at least one epoxy group.

It is said that surprisingly thin, highly abrasion-resistant coatings may be obtained which adhere particularly well to powder-coated surfaces. The coatings are further said to be well adapted to powder coating in their flexibility, and consequently, are said to possess a markedly improved cyclic temperature resistance and, moreover, to exhibit very good scratch resistance or surface hardness and abrasion resistance.

US 3,809,572 discloses a process for inhibiting the corrosion of ferrous base metal articles, and which is adapted to reduce the corrosion of said articles in the presence of water or steam, the process comprising the steps of treating said articles by contacting with a composition consisting essentially of niobium oxide particles admixed in a water medium, and niobium oxide particles present in said composition in amounts, and contacting said articles for a time sufficient to provide said articles with improved resistance to corrosion and water medium having pH above about 7.

Corrosion of ferrous base metal articles by moisture, water, and steam is said to be reduced by treating such articles with a niobium oxide admixed with a water medium having an alkaline pH.

US 5,260,357 discloses a structural adhesive bonding primer composition containing a water-dispersible, modified epoxy resin and a water-dispersible corrosion inhibitor mixture of Components I. and II. in which: Component I. is at least one of (a) a zinc salt of a carboxylic acid of a predetermined formula, (b) zinc phosphate, and (c) zinc molybdate; and Component II. is at least one other and different corrosion inhibitor from the group consisting of: i) (2-benzothiazolythio) succinic acid, and ii) a corrosion inhibitor containing a predetermined metal other than chromium, and mixtures thereof.

The water-dispersible, modified epoxy resin primers are said to exhibit excellent stability, adhesion, and application properties. Their corrosion resistance performance is said to be equivalent to a chromate containing water-dispersible, modified epoxy resin primer composition.

### SUMMARY OF THE INVENTION

In view of the above circumstances, it is an object of the present invention to provide a metal surface treatment composition and a metal surface treatment method superior in stability, which can apply a good chemical conversion treatment to a galvanized steel plate without requiring a burden of waste water treatment, and a galvanized steel plate superior in a rust-preventive property and adhesion, which is obtained by such a metal surface treatment method.

The present invention provides a metal surface treatment composition comprising niobium oxide colloidal particles and a water-borne resin, wherein the niobium oxide colloidal particles are derived from a niobium oxide sol which is stabilized by containing citric acid or salts thereof in an amount of 0.02 to 1.0 by a mole ratio relative to Nb, wherein the water-borne resin is at least one kind selected from the group consisting of acrylic resin, polyolefinic resin, polyurethane resin, olefin-acrylic acid copolymer resin, phenolic resin, polyester resin, alkyd resin, melamine resin, polycarbonate resin, polyacrylic acid and copolymers or block polymers thereof.

Preferably, the niobium oxide colloidal particle has an average particle diameter of 100 nm or less.

Preferably, the niobium oxide colloidal particle has a content of 1 mass % or more relative to the total nonvolatile matter in the metal surface treatment composition when Nb contained in the niobium oxide colloidal particle is converted to equivalent Nb₂O₅.

Preferably, the metal surface treatment composition comprises
the water-borne resin in an amount of 5 to 90 mass % relative to the total nonvolatile matter in the metal surface treatment composition.

Preferably, the metal surface treatment composition comprises
water-dispersible silica in an amount of 80 mass % or less relative to the total nonvolatile matter in the metal surface treatment composition.

Preferably, the metal surface treatment composition comprises
at least one compound selected from the group consisting of vanadium compounds, zirconium compounds and titanium compounds in an amount of 0.1 to 30 mass % on the V, Zr or Ti basis relative to the total nonvolatile matter in the metal surface treatment composition.

Preferably, the metal surface treatment composition comprises
a silane coupling agent in an amount of 0.5 to 30 mass % relative to the total nonvolatile matter in the metal surface treatment composition.

Preferably, the metal surface treatment composition comprises
a phosphate compound in an amount of 0.1 to 20 mass % relative to the total nonvolatile matter in the metal surface treatment composition.

Preferably, in the metal surface treatment composition, pH is 6 to 11.

Preferably, in the metal surface treatment composition, the concentration of the nonvolatile matter is 3 to 50 mass % on the mass of the nonvolatile matter basis.

The present invention provides a metal surface treatment method comprising
applying surface treatment to a galvanized steel plate with the metal surface treatment composition, thereby forming a coat thereof.

The present invention provides a coated galvanized steel plate obtained by the metal surface treatment method.

### DISCLOSURE OF THE INVENTION

Hereinafter, the present invention will be described in detail.

A metal surface treatment composition of the present invention comprises a niobium oxide sol which is formed by dispersing niobium oxide colloidal particles highly stabilized with citric acid or salts thereof in an aqueous medium. The niobium oxide colloidal particles more preferably have a smaller average particle diameter because when the average particle diameter is small, a more stable and dense treated coat of the niobium oxide is formed and therefore the niobium oxide colloidal particles can provide a rust-preventive property stably for an article to be treated. In addition, the metal surface treatment composition does not need to contain components, requiring a burden of waste water treatment, such as chromium and manganese.

The niobium oxide colloidal particle to be used in the present invention refers to one which is formed by niobium oxide dispersing in fine particle form in water. For example, a substance, which is present in intermediate region between niobium hydroxide and niobium oxide and becomes an amorphous state without becoming complete niobium oxide, may be used.

The metal surface treatment composition of the present invention can be prepared by using a niobium oxide sol made by a method publicly known. The niobium oxide sol is not particularly limited, and for example, a substance made by a publicly known method, which is described in Japanese Patent No. 2849799 and the like, can be given. Further, niobium oxide sol made by Taki Chemical Co., Ltd. may be employed.

An example of a method of producing the niobium oxide sol may include a method in which niobium oxide is dissolved in hydrofluoric acid and the dissolved solution is added to aqueous ammonia and then the mixture is filtered and washed to yield niobium hydroxide in slurry form, and oxalate dihydrate is added to the slurry of niobium hydroxide and then water is added, and after a uniform solution composed of niobium oxide colloidal particles is obtained by allowing the reaction of this mixture to proceed under stirring in a condition of refluxing, then citric acid or salt thereof was added to the solution and the resulting mixture is stirred. In order to adjust the obtained niobium oxide sol to a desired level of pH, a basic compound such as ammonia may be added to the sol as required. In order to identify that the reaction has been completed, that is, a uniform solution of niobium oxide colloidal particles has been obtained before adding citric acid, color of the slurry solution can be utilized and when the slurry exhibits blue color, it is assumed to be in a uniform state.

The niobium oxide sol, which can be used for the metal surface treatment composition of the present invention, is formed by making the niobium oxide sol solution stabilized with oxalic acid further contain citric acid and highly stabilizing it. The metal surface treatment composition of the present invention can be prepared by diluting the niobium oxide sol to a required concentration or by adding another component as required and is stable over the long term without causing thickening, gelation or precipitation even after the preparation. An essential point is that the niobium oxide sol to be used in the metal surface treatment composition of the present invention is in a state highly stabilized with citric acid or salt thereof, and an amount of oxalic acid or salt thereof, which is mixed in producing the niobium oxide sol, is not particularly limited. The niobium oxide sol is preferred in that thereby, the stability of niobium oxide colloidal particles is not degraded in being mixed with another components, which is contained in the metal surface treatment composition of the present invention, such as a water-borne resin, water-dispersible silica, vanadium compounds, zirconium compounds, titanium compounds, silane coupling agents and the phosphate compounds.

An amount of citric acid or salts thereof added to the metal surface treatment composition of the present invention is within a range of 0. 02 (lower limit) to 1. 0 (upper limit) by a mole ratio relative to Nb in the metal surface treatment composition. When the amount of citric acid or salts thereof to be added is less than 0. 02 by a mole ratio, the stability in adding another components becomes insufficient, and when it exceeds 1.0 by a mole ratio, it is not possible any longer to attain an effect of stabilization corresponding to the amount to be added and hence it is uneconomical.

The niobium oxide colloidal particles preferably have an average particle diameter of 100 nm or less. When the average particle diameter is small, the niobium oxide colloidal particles can provide a rust-preventive property stably for an article to be treated because a more stable and dense treated coat of the niobium oxide is formed. The average particle diameter of the niobium oxide colloidal particles can be measured using a particle size distribution analyzer based on dynamic scattering light, for example, NICOMPMODEL-370 type (manufactured by PACIFIC SCIENTIFIC INSTRUMENTS Co.).

The metal surface treatment composition of the present invention preferably contains the niobium oxide colloidal particles in an amount of 1 mass % or more relative to the total nonvolatile matter in the metal surface treatment composition when Nb in the colloidal particles is converted to equivalent Nb₂O₅. When the content is less than 1 mass %, it is not preferred since a sufficient rust-preventive property cannot be attained. The lower limit of the content is more preferably 2 mass %, furthermore preferably 3 mass %. The upper limit is preferably 30 mass %, more preferably 15 mass %.

Further, the metal surface treatment composition of the present invention comprises a water-borne resin. A water-borne resin used herein is one containing a water-soluble resin and a water-dispersible resin. The water-borne resin is at least one lind selected from the group consisting of acrylic resins, polyolefinic resins, polyurethane resins, olefin-acrylic acid copolymer resins, phenolic resins, polyester resins, alkyd resins, melamine resins, polycarbonate resins and polyacrylic acid.

These water-borne resins may be used alone or in combination of two or more species, or in the form of copolymers or blockpolymers thereof. When the water-borne resin is used, a leveling agent, a wetting agent and an antifoaming agent may be used in order to improve a film forming property and form a more uniform and smooth film.

When the metal surface treatment composition of the present invention comprises the water-borne resin, the content of the water-borne resin is preferably within a range of 5 mass % (lower limit) to 90 mass % (upper limit) relative to the total nonvolatile matter in the metal surface treatment composition. When the content exceeds 90 mass %, it is not preferred since the adding effect will saturate in this range and the addition becomes uneconomical. When it is less than 5 mass %, it is not preferred since the rust-preventive property may deteriorate. The lower limit is more preferably 10 mass %, furthermore preferably20mass %. The upper limit is more preferably 80 mass %, furthermore preferably 70 mass %.

Preferably, the metal surface treatment composition of the present invention further comprises water-dispersible silica in order to improve the rust-preventive property of a surface treatment film. The water-dispersible silica cannot attain an adequate rust-preventive property when it is used alone, but it can improve the rust-preventive property multiplicatively by being used in combination with the niobium oxide colloidal particles.

The water-dispersible silica is not particularly limited, and examples thereof may include spherical silica, chain silica and aluminum-modified silica, which have fewer impurities such as sodium and the like. The spherical silica is not particularly limited, and examples thereof may include colloidal silica such as "SNOWTEX N", "SNOWTEX O", "SNOWTEX OXS" and "SNOWTEX UP" (each made by Nissan Chemical Industries, Ltd.) and fumed silica such as "AEROSIL" (made by Nippon Aerosil Co., Ltd.). The chain silica is not particularly limited, and examples thereof may include silica sol such as "SNOWTEX PS-M" and "SNOWTEX PS-MO" (each made by Nissan Chemical Industries, Ltd.). Examples of the aluminum-modified silica may include commercially available silica gel such as "ADELITE AT-20A" (made by Asahi Denka Co., Ltd.).

When the metal surface treatment composition of the present invention comprises the water-dispersible silica, the content of SiO₂ in the metal surface treatment composition is preferably 80 mass % or less relative to the total nonvolatile matter in the metal surface treatment composition. When the content exceeds 80 mass %, there is a problem that a coat becomes brittle and a rust-preventive property deteriorates. The upper limit is more preferably 60 mass %, furthermore preferably 30 mass %.

Preferably, the metal surface treatment composition of the present invention further comprises at least one compound selected from the group consisting of vanadium compounds, zirconium compounds and titanium compounds in order to improve the rust-preventive property of a surface treatment film. It is possible to further improve the rust-preventive property by using the niobium oxide colloidal particles in combination with the at least one compound selected from the group consisting of vanadium compounds, zirconium compounds and titanium compounds. It is more preferred to use four, five or six components of the niobium oxide colloidal particles,the water-borneresin,the water-dispersible silica, and the at least one compound selected from the group consisting of vanadium compounds, zirconium compounds and titanium compounds in combination.

The vanadium compound, zirconium compound and titanium compound are not particularly limited as long as they are water-soluble or water-dispersible compounds, and specific examples thereof are as follows.

The vanadium compound is not particularly limited, and examples thereof may include vanadyl compounds, vanadiumpentoxide, vanadates, burned polyvanadic acid, heteropoly vanadic acid and mixtures thereof. Specific examples thereof may include vanadium (II) compounds such as vanadium (II) oxide, and vanadium (II) hydroxide; vanadium (III) compounds such as vanadium (III) oxide (V₂O₃); vanadium (IV) compounds such as vanadium (IV) oxide (V₂O₄), and vanadyl halides (VOX₂); vanadium (V) compounds such as vanadium (V) oxide (V₂O₅); vanadates such as various orthovanadates, metavanadates or pyrovanadates, vanadyl halides (VOX₃); or mixtures thereof. Vanadates are not particularly limited, and examples thereof may include ammonium salt, alkaline metal salts, alkaline earthmetal salts (for example, magnesium, calcium), metal salts of another typical elements (for example, aluminum, tin) and transition metal salts (for example, manganese, cobalt, iron, nickel). In particular, alkaline earth metal salts, zinc salt, manganese salt, and cobalt salt are preferred. These may be obtained by burning oxides of vanadium and oxides, hydroxides or carbonates of various metals together at a temperature of 600°C or more.

The zirconium compound is not particularly limited, and examples thereof may include fluorozirconic acid (H₂ZrF₆); ammonium, lithium, sodium, or potassium salts of fluorozirconic acid; ammonium zirconate oxycarbonate ((NH₄)₂ZrO(CO₃)₂) ; zirconate compounds such as zirconium hydroxide, zirconium carbonate, zirconium borate, zirconium oxalate, zirconium sulfate, zirconium nitrate, zirconyl nitrate, and zirconium fluoride; organic zirconate compounds such as dibutylzirconium dilaurate, dibutylzirconium dioctate, zirconium naphthenate, zirconium octylate, and acetylacetone zirconium; or mixtures thereof.

The titanium compound is not particularly limited, and examples thereof may include fluorine-titanium compounds such as fluorotitanic acid, ammonium fluorotitanate, sodium fluorotitanate, potassium fluorotitanate, fluorotitanic acid, alkaline metal fluorotitanate, and titanium fluoride; organic titanium compounds such as titanium potassium oxalate, titanium isopropoxide, isopropyl titanate, titanium ethoxide, titanium 2-ethyl 1-hexanolate, tetraisopropyl titanate, tetran-butyl titanate, butyltitanate dimer, titanium lactate, and titanium triethanolaminate; or mixtures thereof.

When the metal surface treatment composition of the present invention comprises at least one compound selected from the group consisting of the vanadium compounds, the zirconium compounds and the titanium compounds, the content of the compounds is preferably within a range of 0.1 mass % (lower limit) to 30 mass % (upper limit) on the V, Zr or Ti basis relative to the total nonvolatile matter in the metal surface treatment composition. When the content exceeds 30 mass %, it is not preferred since the adding effect will saturate in this range and the addition becomes uneconomical. When it is less than 0.1 mass %, it is not preferred since the rust-preventive property may deteriorate. The lower limit is more preferably 0.5 mass %, furthermore preferably 1.0 mass %. The upper limit is more preferably 15 mass %, furthermore preferably 7.5 mass %. Incidentally, since some kinds of compounds to be usedmay cause the gelation and thickening of the metal surface treatment composition and the solution stability may deteriorate, it is necessary to blend the compounds within a preferred range.

Preferably, the metal surface treatment composition of the present invention further contains a silane coupling agent. It is preferred in that by containing the silane coupling agent, the adhesion of a coat to a metal surface can be improved and the silane coupling agent has an action as a crosslinking agent of the water-borne resin and thereby the corrosion resistance can be improved. The silane coupling agent is not particularly limited, and examples thereof may include vinylmethoxysilane, vinyltrimethoxysilane, vinylethoxysilane, vinyltriethoxysilane, 3-aminopropyltriethoxysilane, 3-glycidoxypropyltrimethoxysilane, 3-methacryloxypropyltrimethoxysilane, 3-mercaptopropyltrimethoxysilane, N-(1,3-dimethylbutylidene)-3-(triethoxysilyl)-1-propane amine, N,N'-bis[3-(trimethoxysilyl)propyl]ethylenediamine, (N-β-aminoethyl)-γ-aminopropylmethyldimethoxysilane, (N-β-aminoethyl)-γ-aminopropyltrimethoxysilane, γ-aminopropyltrimethoxysilane, γ-aminopropyltriethoxysilane, γ-glycidoxypropyltrimethoxysilane, γ-glycidoxypropyltriethoxysilane, γ-glycidoxypropylmethyldimethoxysilane, 2-(3,4-epoxycyclohexyl)ethyltrimethoxysilane, γ-methacryloxypropyltrimethoxysilane, γ-methacryloxypropyltriethoxysilane, γ-mercaptopropyltrimethoxysilane, γ-mercaptopropyltriethoxysilane and N-[2-(vinylbenzylamino)ethyl]-3-aminopropyltrimethoxysilane.

Among them, examples of the particularly preferred silane coupling agent may include vinylmethoxysilane, vinylethoxysilane, 3-aminopropyltriethoxysilane, 3-glycidoxypropyltrimethoxysilane, 3-methacryloxypropyltrimethoxysilane, 3-mercaptopropyltrimethoxysilane and N-(1,3-dimethylbutylidene)-3-(triethoxysilyl)-1-propane amine, N,N'-bis[3-(trimethoxysilyl)propyl]ethylenediamine. The silane coupling agent may be used alone or in combination of two or more species.

When the metal surface treatment composition of the present invention comprises the silane coupling agent, the content of the silane coupling agent in the metal surface treatment composition is preferably within a range of 0.5 mass % (lower limit) to 30 mass % (upper limit) relative to the total nonvolatile matter in the metal surface treatment composition. When the content of the silane coupling agent is less than 0.5 mass %, it is not preferred since the effect of improving corrosion resistance and adhesion to a chromium-free rust-preventive coating agent may be insufficient, and when it exceeds 30 mass %, it is not preferred since the adding effect will saturate in this range and the addition becomes uneconomical, and in addition the gelation and thickening of the composition may arise and the solution stability may deteriorate. The lower limit is more preferably 1 mass % and the upper limit is more preferably 20 mass %.

The metal surface treatment composition of the present invention preferably contains a phosphate compound. The phosphate compound contained in the metal surface treatment composition of the present invention has a function of further improving the rust-preventive property of a surface treatment film by eluting metal, being a material to be treated, and forming a metal salt of phosphate on the surface of the material to be treated.

The phosphate compound is not particularly limited as long as it is a compound capable of forming phosphate ions in water, and examples thereof may include phosphorous acid, hypophosphorous acid, organic phosphoric acids, organic phosphorous acids, phosphoric acid; phosphate salts such as Na₃PO₄, Na₂HPO₄ and NaH₂PO₄; and polyphosphoric acid such as polyphosphoric acid, metaphosphoric acid, pyrophosphoric acid and ultraphosphoric acid, and salts thereof.

When the metal surface treatment composition of the present invention comprises the phosphate compound, the content of the phosphate compound in the metal surface treatment composition is preferably within a range of 0.1 mass % (lower limit) to 20 mass % (upper limit) relative to the total solidmatter in the metal surface treatment composition. When the content is less than 0.1 mass %, it is not preferred since the effect of improving the corrosion resistance may be insufficient, and when it exceeds 20 mass %, it is not preferred since this may cause excessive etching on a galvanized steel plate or the gelation of the composition. The lower limit is more preferably 0.5 mass % and the upper limit is more preferably 10 mass %.

The metal surface treatment composition of the present invention preferably has pH within a range of 6 (lower limit) to 11 (upper limit). When the pH is less than 6, the stability in mixing the niobium oxide sol may deteriorate and the solution stability of the whole compositions may deteriorate, and in addition this pH may cause excessive etching on a galvanized steel plate to lead to a defective appearance. When it exceeds 11, it is not preferred since this pH may cause excessive etching on a galvanized steel plate to lead to a defective appearance. The lower limit is more preferably 7 and the upper limit is more preferably 10. The pH of the metal surface treatment composition is preferably adjusted within the range by adding a basic compound. Particularly, it is more preferred to use volatile compounds such as ammonia and amines as the basic compound.

The metal surface treatment composition of the present invention preferably contains nonvolatile matter within a range of 3 mass % (lower limit) to 50 mass % (upper limit) on the mass of the nonvolatile matter basis. When the concentration of the nonvolatile matter is less than 3 mass %, it is not preferred since it may be impossible to attain an sufficient film thickness for maintaining the rust-preventive property in applying the metal surface treatment composition. When it exceeds 50 mass %, it is not preferred since this may cause the gelation of the composition. The lower limit is more preferably 10 mass % and the upper limit is more preferably 30 mass %.

The niobium oxide colloidal particles highly stabilized by the citric acid or salts thereof to be used in the present invention also has the excellent stability in mixing with such electrolyte components as described above. Therefore, the metal surface treatment composition of the present invention, which comprises the respective components described above, is superior in the stability, so that it can perform the surface treatment of a galvanized steel plate with stability.

A method of producing the metal surface treatment composition of the present invention is not particularly limited, and it can be obtained, for example, by charging the niobium oxide colloidal particles, the water-borne resin, the water-dispersible silica, at least one compound selected from the group consisting of vanadium compounds, zirconium compounds and titanium compounds, the silane coupling agent and the phosphate compound to a container in this order and by stirring the resulting mixture so as to become uniform.

The metal surface treatment method of the present invention is a method in which a galvanized steel plate is treated with the metal surface treatment composition. A galvanized steel plate, which can be treated in the metal surface treatment method of the present invention, is not particularly limited, and examples thereof may include steel plates, which are plated with zinc or a zinc-based alloy through electroplating, hot dipping and vacuum evaporation coating, such as a galvanized steel plate, a steel plate plated with a zinc-nickel alloy, a steel plate plated with a zinc-iron alloy, a steel plate plated with a zinc-chromium alloy, a steel plate plated with a zinc-aluminum alloy, a steel plate plated with a zinc-titanium alloy, a steel plate plated with a zinc-magnesium alloy and a steel plate plated with a zinc-manganese alloy.

In the metal surface treatment method, the galvanized steel plate degreased as required is treated with the metal surface treatment composition. The treating method with the metal surface treatment composition is not particularly limited, and examples thereof may include roller coating, shower coating, air-spray coating, airless-spray coating, curtain flow coating, brush coating and immersion coating, which are commonly used.

Preferably, the metal surface treatment composition of the present invention is applied in an application rate of 0.1 g/m² (lower limit) to 10.0 g/m² (upper limit) as amass of the nonvolatile matter in a coat. When this application rate is less than 0.1 g/m², there may be cases where the ability to be processed deteriorates or the rust-preventive property is not adequately attained due to insufficient thickness. When it exceeds 10. 0 g/m², there may be cases where it is economically disadvantageous since there is not an increase in the effect of increasing a film thickness or winding becomes difficult due to the increased thickness. The lower limit is more preferably 0.2 g/m², and furthermore preferably 0.3 g/m². The upper limit is more preferably 5.0 g/m², and furthermore preferably 3.0 g/m².

The coat is dried by heating after treating with the metal surface treatment composition. A temperature, at which the drying is conducted, is preferably within a range of 50°C (lower limit) to 250°C (upper limit). When it is less than 50°C, drying efficiency may become worse due to a low evaporation rate of water. When it exceeds 250°C, formed components in a coat may be decomposed due to elevated temperatures. More preferably, the lower limit is 60°C and the upper limit is 150°C. Drying time is preferably in a rage of 1 second (lower limit) to 300 seconds (upper limit), and more preferably in a rage of 3 seconds (lower limit) to 60 seconds (upper limit).

The present invention also provides a galvanized steel plate obtained by the metal surface treatment method. Since the galvanized steel plate of the present invention is one on which a good surface treatment coat is formed, it has an excellent rust-preventive property and does not form white color rust.

The metal surface treatment composition of the present invention is one which comprises the niobium oxide colloidal particles having the excellent stability and provides the galvanized steel plate with the good rust-preventive property and adhesion equal to a chromate-treatment agent without requiring a burden of waste water treatment. By using the metal surface treatment composition, it is possible to provide the method of metal surface treatment, which can apply a good metal surface treatment to a galvanized steel plate. Further, by using the method of metal surface treatment of the present invention, it is possible to provide a galvanized steel plate which has the excellent rust-preventive property and adhesion.

Since the metal surface treatment composition of the present invention includes the niobium oxide colloidal particles highly stabilized with citric acid or salts thereof, it has the excellent solution stability and provides the good rust-preventive property and adhesion for a film to be obtained. Further, since the metal surface treatment composition of the present invention does not contain components such as chromium and manganese as an essential component, it does not require an excessive burden of waste water treatment.

### EXAMPLES

Hereinafter, the present invention will be described in detail by way of examples, but the present invention is not limited to these examples. In addition, "%" refers to "mass %" in the examples, unless otherwise specified.

### Preparation of metal surface treatment compositions

### Examples 1 to 16, and Comparative Examples 1 to 3

Charged To a container were water-dispersible silica, a vanadium compound, a zirconium compound, a titanium compound, niobium oxide colloidal particles, a water-borne resin, a silane coupling agent and a phosphate compound in this order under being stirred. After stirring for 30 minutes, deionized water was added to this mixture to prepare metal surface treatment compositions having the composition shown in Table 1. Concentrations of the nonvolatile matter and pHs of the obtained metal surface treatment compositions are shown in Table 2.

### Comparative Example 4

A metal surface treatment composition having the composition shown in Table 1 was prepared by following the same procedure as in Example 15 except for changing the niobium oxide colloidal particles to K₂NbF₇ (made by Morita Chemical Industries Co., Ltd.), which is a soluble niobium compound. A concentration of the nonvolatile matter and pH of the obtained metal surface treatment composition is shown in Table 2.

The niobium oxide colloidal particles, the water-borne resins, the water-dispersible silica, the vanadium compounds, the zirconium compounds, the titanium compounds, the silane coupling agents and the phosphate compounds used in Table 1 were as follows.

### [Niobium oxide colloidal particle]

A: niobium oxide sol (Nb₂O₅: 10%, average particle diameter: 5 nm, pH 4, citric acid/niobium (mole ratio) = 0, made by Taki Chemical Co., Ltd.)
B: niobium oxide sol SAM-02 (Nb₂O₅: 10%, average particle diameter:
5 nm, pH 3.8, citric acid/niobium (mole ratio) = 0.05, made by Taki Chemical Co., Ltd.)
C: niobium oxide sol SAM-04 (Nb₂O₅: 5%, average particle diameter: 10 nm, pH 9, citric acid/niobium (mole ratio) = 0.16, made by Taki Chemical Co., Ltd.)

### [Water-borne resin]

A: PC 2200 (ethylene-acrylic acid copolymer resin, concentration of nonvolatile matter: 30%, made by SHOEI CHEMICAL CO., LTD.)
B: SUPERFLEX420 (polyurethane resin, concentration of nonvolatile matter: 32%, made by DAI-ICHI KOGYO SEIYAKU CO., LTD.)
C: JURYMER AC-10L (polyacrylic acid, concentration of nonvolatile matter: 40%, made by NIHON JUNYAKU CO., LTD.)

### [Water-dispersible silica]

A: SNOWTEX O (SiO₂: 20%, made by Nissan Chemical Industries, Ltd.)
B: ADELITE AT-20A (SiO₂: 20%, made by Asahi Denka Co., Ltd.)
C; SNOWTEX N (SiO₂: 20%, made by Nissan Chemical Industries, Ltd.)

### [Vanadium compound]

A: ammonium metavanadate (V: 43.6%, reagent)
B: vanadium pentoxide (V: 56.0%, reagent)
C: sodium metavanadate (V: 41.8%, reagent)

### [Zirconium compound]

A: Zircosol AC-7 (zirconium ammonium carbonate, Zr: 74.0% (on the solid matter basis), made by DAIICHI KIGENSO KAGAKU KOGYO CO., LTD.)
B: (acetylacetonato)zirconium(IV) (Zr: 18.7%, reagent)

### [Titanium compound]

A: Orgatics TC-400 (titanium triethanolaminate, Ti: 10.4% (on the solid matter basis), made byMatsumoto Chemical Industry Co., Ltd.)

### [Silane coupling agent]

A: Sila-Ace S-510 (γ-glycidoxypropyltrimethoxysilane, concentration of nonvolatile matter: 100%, made by CHISSO CORPORATION)
B: Sila-Ace S-210 (vinyltrimethoxysilane, concentration of nonvolatile matter: 100%, made by CHISSO CORPORATION)

### [Phosphate compound]

A: diammonium hydrogen phosphate (concentration of nonvolatile matter: 100%, reagent)

| | | Metal surface treatment composition (mass % relative to the total nonvolatile matter) | | | | | | | | | | | | | | | | | |
|---|---|---|---|---|---|---|---|---|---|---|---|---|---|---|---|---|---|---|---|
| | | Niobiumoxide colloidal particles | | | | Water-borne resin | | Water-dispersible silica | | Vanadium compound | | Zirconium compound | | Titanium compound | | Silane coupling agent | | Phosphate compound | |
| | | Kinds | Mass % | Mole ratio of citric acid | pH | Kinds | Mass | % Kinds | Mass % | Kinds | Mass % | Kinds | Mass % | Kinds | Mass % | Kinds | Mass | % Kinds | Mass % |
| Example | 1* | C | 100 | 0.18 | 9.0 | - | - | - | - | - | - | - | - | - | - | - | - | - | - |
| | 2 | C | 30 | 0.16 | 9.0 | A | 70 | - | - | - | - | - | - | - | - | - | - | - | - |
| | 3 | B | 30 | 0.05 | 3.8 | A | 70 | - | - | - | - | - | - | - | - | - | - | - | - |
| | 4 | C | 30 | 0.16 | 9.0 | A 4 | 0 | C | 30 | - | - | - | - | - | - | - | - | - | - |
| | 5 | C | 1 | 0.18 | 9.0 | A | 70 | B | 29 | - | - | - | - | - | - | - | - | - | - |
| | 6 | 0 | 10 | 0.18 | 9.0 | A | 30 | A | 60 | C | 10(V:4.2) | - | - | - | - | - | - | - | - |
| | 7 | C 10 | | 0.16 | 9.0 | A | 30 | C | 59 | - | - | A | 1.0(Zr:0.7) | - | - | - | - | - | - |
| | 8 | C | 10 | 0.16 | 9.0 | B | 30 | C | 65 | - | - | A | 5.0(Zr3.7) | - | - | - | - | - | - |
| | 9 | C | 1 | 0.16 | 9.0 | A | 90 | C | 8.8 | B | 0.2(V.0.1) | - | - | - | - | - | - | - | - |
| | 10 | C | 10 | 0.16 | 9.0 | C | 10 | C | 42 | - | - | A | 38(Zr:28.1) | - | - | - | - | - | - |
| | 11 | C | 20 | 0.16 | 9.0 | A | 55 | C | 5 | - | - | B | 20(Zr:3.7) | - | - | - | - | - | - |
| | 12 | C | 10 | 0.16 | 9.0 | A 5 | - | A | 80 | A | 5.0(V:2.2) | - | - | - | - | - | - | - | - |
| | 13 | C | 5 | 0.16 | 9.0 | A | 65 | A | 20 | C | 10(V:4.2) | - | - | - | - | - | - | - | - |
| | 14 | O | 7 | 0.16 | 9.0 | A | 65 | A | 24 | A | 2.0(V:0.9) | - | - | A | 20(T1:0.2) | - | - | - | - |
| | 15 | C | 7 | 0.16 | 8.0 | A | 64 | A | 24 | A | 2.0(V:0.9) | A | 2.0(Ti:0.2) | A | 1.0 | A | 1.0 | A | 1.0 |
| | 16 | C | 7 | 0.16 | 9.0 | A | 63 | A | 24 | A | 2.0(V:0.9) | - | - | - | - | - | - | - | - |
| Comparative Example | 1 | - | - | - | - | A | 70 | A | 28 | A | 2.0(V:0.9) | - | - | - | - | - | - | - | - |
| | 2 | - | - | - | - | A | 70 | A | 24 | A | 2.0(V:0.9) | - | - | A | 2.0(Ti:0.2) | A | 1.0 | A | 1.0 |
| | 3 | A | 10 | 0 | 4.0 | A | 30 | A | 50 | A | 10(V:4.4) | - | - | - | - | - | - | - | - |
| | 4 | K₂NbF₇:16(Nb₂O₅:7) | | | | C | 64 | A | 15 | A | 2.0(V-0.9) | - | - | A | 2.0(Ti:0.2) | A | 1.0 | - | - |

| | | | | | | | | | | | | | | | | | | | |
|---|---|---|---|---|---|---|---|---|---|---|---|---|---|---|---|---|---|---|---|
| *Reference Example | | | | | | | | | | | | | | | | | | | |

### Preparation of test panels

Commercially available galvanized steel plates (manufactured by Nippon Testpanel Co., Ltd., 70 mm × 150 mm × 0.4 mm) were degreased by spraying at 60°C for 2 minutes using SURF CLEANER 53S (made by NIPPON PAINT Co., Ltd.), being a commercially available alkaline degreasing agent, and rinsed with water and dried. After drying the steel plates, the metal surface treatment compositions prepared in Examples 1 to 16 and Comparative Examples 1 to 4 were applied to the steel plates with a barcoater in such a way that an application rate after drying was 0.2 to 1.0 g/m² of surface area and then dried at a metal surface temperature of 80°C to obtain test panels. The resulting test panels were evaluated according to the following methods. The results of measurements are shown in Table 2. The application rate was given by analyzing metal elements in the composition using "XRF-1700" (X-ray fluorescence spectrometer manufactured by Shimadzu Corp.) to yield the contents by mass % of metal elements relative to total nonvolatile matter and converting the content.

### (Evaluation methods)

### <Corrosion resistance>

A flat portion of each test panel and an end face and a rear face of a formed portion, which was extruded by 8 mm by an Erichsen tester, in each test panel were sealed with a tape and 5% salt water was sprayed to the coated surface of the test panel at 35°C. After a lapse of 72 hours since salt water spray, a rate of the surface area where white color rust was generated was evaluated according to the following criteria.
⊚ : no white color rust occurred
O: less than 10% ratio of the surface area where white color rust occurred
○Δ: not less than 10% and less than 30% of that ratio
Δ: not less than 30% and less than 50% of that ratio
× : not less than 50% of that ratio

### <Film appearance>

The appearance of the test panels was visually evaluated according to the following criteria.
⊚ : Water-clear
O: Slightly whitening (level of using without problems)
Δ: Whitening to a small extent
×: Whitening

### <Solution stability>

The metal surface treatment compositions were left alone at room temperature for 30 days and then their conditions were visually evaluated according to the following criteria.
⊚: No change
O: Slightly thickening (level of using without problems)
Δ : Thickening
× : Gelation

**Table 2**

| | | Concentration of nonvolatile matter in treatment composition (%) | pH of treatment composition | Application rate (g/m²) | Corrosion resistance (SST 72 hours) | | Film Appearance | Solution stability |
|---|---|---|---|---|---|---|---|---|
| | | | | | Flat portion | Portion formed by Erichsen tester | | |
| Examples | 1* | 5 | 9.0 | 1.0 | OΔ | OΔ | ⊚ | ⊚ |
| | 2 | 10 | 8.7 | 0.8 | O | O | ⊚ | ⊚ |
| | 3 | 5 | 6.0 | 0.8 | O | O | O | O |
| | 4 | 10 | 8.6 | 0.8 | ⊚ | O | ⊚ | ⊚ |
| | 5 | 10 | 9.0 | 0.8 | O | OΔ | ⊚ | ⊚ |
| | 6 | 10 | 8.4 | 0.4 | ⊚ | ⊚ | ⊚ | ⊚ |
| | 7 | 10 | 8.8 | 0.6 | ⊚ | O | ⊚ | ⊚ |
| | 8 | 5 | 8.6 | 0.4 | ⊚ | ⊚ | ⊚ | ⊚ |
| | 9 | 10 | 8.7 | 0.6 | O | O | ⊚ | ⊚ |
| | 10 | 5 | 8.4 | 0.6 | ⊚ | ⊚ | ⊚ | O |
| | 11 | 5 | 8.4 | 0.5 | ⊚ | ⊚ | ⊚ | ⊚ |
| | 12 | 5 | 7.8 | 0.6 | ⊚ | O | ⊚ | ⊚ |
| | 13 | 10 | 8.4 | 0.4 | ⊚ | ⊚ | ⊚ | O |
| | 14 | 20 | 8.4 | 0.4 | ⊚ | ⊚ | ⊚ | ⊚ |
| | 15 | 20 | 8.4 | 0.3 | ⊚ | ⊚ | ⊚ | ⊚ |
| | 16 | 20 | 8.4 | 02 | ⊚ | ⊚ | ⊚ | ⊚ |
| Comparative Examples | 1 | 15 | 8.5 | 0.8 | Δ | × | ⊚ | ⊚ |
| | 2 | 15 | 8.5 | 0.4 | Δ | Δ | ⊚ | ⊚ |
| | 3 | 5 | 4.0 | 0.4 | ⊚ | ⊚ | Δ | × |
| | 4 | 7 | 3.0 | 0.4 | Δ | Δ | × | Δ |

| | | | | | | | | |
|---|---|---|---|---|---|---|---|---|
| *Reference Example | | | | | | | | |

As shown in Table 2, the metal surface treatment compositions obtained in Examples 1 to 16 were superior in the solution stability and the films obtained by applying the metal surface treatment compositions had the high corrosion resistance and the good appearances. On the other hand, since the metal surface treatment compositions obtained in Comparative Examples 1 and 2 could not attain chemical conversion coats which had excellent rust-preventive property, they could not obtain good galvanized steel plates. In addition, the metal surface treatment composition obtained in Comparative Example 3 was not good in the solution stability and the appearance of the obtained film was inferior to that of Examples. Further, the metal surface treatment composition of Comparative Example 4, not containing the niobium oxide colloidal particles, exhibited thickening of solution by secular changes and the appearance and the corrosion resistance of the obtained film were not satisfactory.

## Claims

1. A surface treatment composition for a galvanized steel plate to improve the rust preventing property and adhesion comprising niobium oxide colloidal particles and a water-borne resin,
wherein the niobium oxide colloidal particles are derived from a niobium oxide sol which is stabilized by containing citric acid or salts thereof in an amount of 0.02 to 1.0 by a mole ratio relative to Nb
wherein the water-borne resin is at least one kind selected from the group consisting of acrylic resin, polyolefinic resin, polyurethane resin, olefin-acrylic acid copolymer resin, phenolic resin, polyester resin, alkyd resin, melamine resin, polycarbonate resin, polyacrylic acid and copolymers or block polymers thereof.

2. The surface treatment composition according to claim 1,
wherein the niobium oxide colloidal particle has an average particle diameter of 100 nm or less.

3. The surface treatment composition according to claim 1 or 2, wherein the niobium oxide colloidal particle has a content of 1 mass % or more relative to the total nonvolatile matter in the surface treatment composition when Nb contained in the niobium oxide colloidal particle is converted to equivalent Nb₂O₅.

4. The surface treatment composition according to any one of claims 1 to 3, comprising the water-borne resin in an amount of 5 to 90 mass % relative to the total nonvolatile matter in the surface treatment composition.

5. The surface treatment composition according to any one of claims 1 to 4, comprising water-dispersible silica in an amount of 80 mass % or less relative to the total nonvolatile matter in the surface treatment composition.

6. The surface treatment composition according to any one of claims 1 to 5, comprising at least one compound selected from the group consisting of vanadium compounds, zirconium compounds and titanium compounds in an amount of 0.1 to 30 mass % on the V, Zr or Ti basis relative to the total nonvolatile matter in the surface treatment composition.

7. The surface treatment composition according to any one of claims 1 to 6, comprising a silane coupling agent in an amount of 0.5 to 30 mass % relative to the total nonvolatile matter in the surface treatment composition.

8. The surface treatment composition according to any one of claims 1 to 7, comprising a phosphate compound in an amount of 0.1 to 20 mass % relative to the total nonvolatile matter in the surface treatment composition.

9. The surface treatment composition according to any one of claims 1 to 8, wherein pH is 6 to 11.

10. The surface treatment composition according to any one of claims 1 to 9, wherein the concentration of the nonvolatile matter is 3 to 50 mass %.

11. A surface treatment method comprising applying surface treatment to a galvanized steel plate with the surface treatment composition according to any one of claims 1 to 10 and drying by heating, thereby forming a coat thereof.

12. A coated galvanized steel plate obtained by the surface treatment method according to claim 11.

## Patentansprüche

1. Oberflächenbehandlungszusammensetzung für eine galvanisierte Stahlplatte, zur Verbesserung der Rostverhinderungseigenschaft und Adhäsion, umfassend kolloidale Nioboxidteilchen und ein Harz auf Wasserbasis,
worin die kolloidalen Nioboxidteilchen von einem Nioboxidsol stammen, das stabilisiert ist, indem es Zitronensäure oder Salze davon in einer Menge von 0,02 bis 1,0, als Molverhältnis bezogen auf Nb, enthält, worin das Harz auf Wasserbasis zumindest eine Art ist, ausgewählt aus der Gruppe bestehend aus Acrylharz, polyolefinischem Harz, Polyurethanharz, Olefin-Acrylsäure-Copolymerharz, phenolischem Harz, Polyesterharz, Alkydharz, Melaminharz, Polycarbonatharz, Polyacrylsäure und Copolymeren oder Blockpolymeren davon.

2. Oberflächenbehandlungszusammensetzung nach Anspruch 1, worin das kolloidale Nioboxidteilchen einen durchschnittlichen Teilchendurchmesser von 100 nm oder weniger hat.

3. Oberflächenbehandlungszusammensetzung nach Anspruch 1 oder 2, worin das kolloidale Nioboxidteilchen einen Gehalt von 1 Massen% oder mehr bezogen auf den gesamten nichtflüchtigen Stoff in der Oberflächenbehandlungszusammensetzung aufweist, wenn Nb, das in dem kolloidalen Nioboxidteilchen enthalten ist, in Nb₂O₅ umgewandelt ist.

4. Oberflächenbehandlungszusammensetzung nach einem der Ansprüche 1 bis 3, umfassend das Harz auf Wasserbasis in einer Menge von 5 bis 90 Massen%, bezogen auf den gesamten nichtflüchtigen Stoff in der Oberflächenbehandlungszusammensetzung.

5. Oberflächenbehandlungszusammensetzung nach einem der Ansprüche 1 bis 4, umfassend wasserdispergierbares Silika in einer Menge von 80 Massen% oder weniger, bezogen auf den gesamten nichtflüchtigen Stoff in der Oberflächenbehandlungszusammensetzung.

6. Oberflächenbehandlungszusammensetzung nach einem der Ansprüche 1 bis 5, umfassend zumindest eine Verbindung, ausgewählt aus der Gruppe, bestehend aus Vanadiumverbindungen, Zirkoniumverbindungen und Titanverbindungen in einer Menge von 0,1 bis 30 Massen% auf V-, Zr- oder Ti-Basis, bezogen auf den gesamten nichtflüchtigen Stoff in der Oberflächenbehandlungszusammensetzung.

7. Oberflächenbehandlungszusammensetzung nach einem der Ansprüche 1 bis 6, umfassend ein Silankupplungsmittel in einer Menge von 0,5 bis 30 Massen%, bezogen auf den gesamten nichtflüchtigen Stoff in der Oberflächenbehandlungszusammensetzung.

8. Oberflächenbehandlungszusammensetzung nach einem der Ansprüche 1 bis 7, umfassend, eine Phosphatverbindung in einer Menge von 0,1 bis 20 Massen%, bezogen auf den gesamten nichtflüchtigen Stoff in der Oberflächenbehandlungszusammensetzung.

9. Oberflächenbehandlungszusammensetzung nach einem der Ansprüche 1 bis 8, worin der pH 6 bis 11 ist.

10. Oberflächenbehandlungszusammensetzung nach einem der Ansprüche 1 bis 9, worin die Konzentration der nichtflüchtigen Stoffe 3 bis 50 Massen% ist.

11. Oberflächenbehandlungsverfahren, umfassend die Durchführung einer Oberflächenbehandlung mit einer galvanisierten Stahlplatte mit der Oberflächenbehandlungszusammensetzung nach einem der Ansprüche 1 bis 10 und Trocknen durch Erwärmen, unter Bildung einer Beschichtung davon.

12. Beschichtete galvanisierte Stahlplatte, erhalten durch das Oberflächenbehandlungsverfahren gemäß Anspruch 11.

## Revendications

1. Composition de traitement de surface pour une tôle d'acier galvanisé pour améliorer les propriétés antirouille et l'adhésion, comprenant des particules colloïdales d'oxyde de niobium et une résine aqueuse,
où les particules colloïdales d'oxyde de niobium sont dérivées d'un sol d'oxyde de niobium qui est stabilisé par le fait qu'il contient de l'acide citrique ou des sels de celui-ci en une quantité de 0,02 à 1,0 en rapport molaire par rapport à Nb,
où la résine aqueuse est au moins un type choisi dans le groupe consistant en une résine acrylique, une résine polyoléfinique, une résine de polyuréthane, une résine de copolymère oléfine-acide acrylique, une résine phénolique, une résine de polyester, une résine alkyde, une résine de mélamine, une résine de polycarbonate, un poly(acide acrylique) et leurs copolymères ou polymères séquencés.

2. Composition de traitement de surface selon la revendication 1 où la particule colloïdale d'oxyde de niobium a un diamètre de particule moyen de 100 nm ou moins.

3. Composition de traitement de surface selon la revendication 1 ou 2
où la particule colloïdale d'oxyde de niobium a une teneur de 1 % en masse ou plus par rapport à la matière non volatile totale dans la composition de traitement de surface quand Nb contenu dans la particule colloïdale d'oxyde de niobium est converti en Nb₂O₅ équivalent.

4. Composition de traitement de surface selon l'une quelconque des revendications 1 à 3 comprenant la résine aqueuse en une quantité de 5 à 90 % en masse par rapport à la matière non volatile totale dans la composition de traitement de surface.

5. Composition de traitement de surface selon l'une quelconque des revendications 1 à 4 comprenant de la silice dispersible dans l'eau en une quantité de 80 % en masse ou moins par rapport à la matière non volatile totale dans la composition de traitement de surface.

6. Composition de traitement de surface selon l'une quelconque des revendications 1 à 5 comprenant au moins un composé choisi dans le groupe consistant en les composés du vanadium, les composés du zirconium et les composés du titane en une quantité de 0,1 à 30 % en masse sur la base de V, Zr ou Ti par rapport à la matière non volatile totale dans la composition de traitement de surface.

7. Composition de traitement de surface selon l'une quelconque des revendications 1 à 6 comprenant un agent de couplage silane en une quantité de 0,5 à 30 % en masse par rapport à la matière non volatile totale dans la composition de traitement de surface.

8. Composition de traitement de surface selon l'une quelconque des revendications 1 à 7 comprenant un composé phosphate en une quantité de 0,1 à 20 % en masse par rapport à la matière non volatile totale dans la composition de traitement de surface.

9. Composition de traitement de surface selon l'une quelconque des revendications 1 à 8 où le pH est 6 à 11.

10. Composition de traitement de surface selon l'une quelconque des revendications 1 à 9 où la concentration de la matière non volatile est 3 à 50 % en masse.

11. Procédé de traitement de surface comprenant l'application d'un traitement de surface à une tôle d'acier galvanisé avec la composition de traitement de surface selon l'une quelconque des revendications 1 à 10 et le séchage par chauffage, pour former un revêtement de celle-ci.

12. Tôle d'acier galvanisé revêtue obtenue par le procédé de traitement de surface selon la revendication 11.
